# EUROPÄISCHE PATENTANMELDUNG

(11) **EP 0 768 776 A1**
(43) Veröffentlichungstag der Anmeldung: **16.04.1997**
(21) Anmeldenummer: 96890158.7
(22) Anmeldetag: 07.10.1996
(51) Int. Cl.: H04L 12/437

(54) **Kommunikationsnetzwerk und Verfahren zur Übertragung von Daten**

(30) Priorität: 16.10.1995 AT 1719/95
(71) Anmelder: FREQUENTIS NACHRICHTENTECHNIK GESELLSCHAFT m.b.H., 1120 Wien (AT)
(72) Erfinder: Reisinger, Johannes, Dipl.-Ing. Dr., 1030 Wien (AT); Widner, Herbert. Dipl.-Ing., 1110 Wien (AT)
(74) Vertreter: Brauneiss, Leo, Dipl.Ing.

(57) **Zusammenfassung**

Die Erfindung betrifft ein Kommunikationsnetzwerk bzw. ein Verfahren zur Übertragung von Daten, insbesondere für Flugsicherungsanlagen, mit einer Anzahl von in einem Ringsystem hintereinander angeordneten Knoten (N), wobei an die einzelnen Knoten (N) Peripherieeinheiten (3) angeschlossen sind, mit denen Daten in die umlaufenden Rahmen aufgebbar und/oder aus diesen entnehmbar sind. Erfindungsgemäß ist vorgesehen, daß jeder Knoten (N) an zumindest drei im Ring vorangehende Knoten (N-1, N-2, N-3) über jeweils ein eigenes Übertragungsmedium (M1, M2, M3) angeschlossen ist,
daß jedem Knoten (N) über die einzelnen Übertragungsmedien (M1, M2, M3) von jedem dieser vorangehenden Knoten (N-1, N-2, N-3) jeweils alle abgehenden Daten zugeführt sind,
daß jeder der Knoten (N) jeweils über ein eigenes Übertragungsmedium (M1, M2, M3) an zumindest drei im Ringsystem nachfolgende Knoten (N+1, N+2, N+3) angeschlossen ist,
und daß von jedem Knoten (N) seine eigenen abzusendenden Daten und alle von den angeschlossenen vorangehenden Knoten (N-1, N-2, N-3) empfangenen Daten jedem von diesen angeschlossenen folgenden Knoten (N+1, N+2, N+3) zugeführt sind.

## Beschreibung

Die Erfindung betrifft ein Verfahren gemäß dem Oberbegriff des Patentanspruches 1, sowie ein Kommunikationsnetzwerk gemäß dem Oberbegriff des Patentanspruches 9.

Kommunikationsnetzwerke und Verfahren zur Übertragung von Daten in Kommunikationsnetzwerken sind in der oben angeführten Art bekannt. Der Betriebsaufwand bei derartigen Systemen ist jedoch relativ hoch, diese bekannten Systeme ermöglichen zumeist nicht den Einsatz modernster Technologien und besitzen keine sonderlich große Flexibilität. Die Übertragungsraten bei diesen Systemen sind oftmals nicht ausreichend und die System leistung zumeist nicht hoch genug. Die Zuverlässigkeit dieser Systeme genügt in vielen Fällen nicht den heutigen Anforderungen.

Ziel der Erfindung ist es, ein Kommunikationsnetzwerk bzw. ein Verfahren zur Übertragung von Daten in Kommunikationsnetzwerken zu erstellen, wobei die Zuverlässigkeit und Verfügbarkeit des Systems extrem hoch gesteigert werden kann, wobei eine Verarbeitung der Daten innerhalb von ausgesprochen kurzen Zeitspannen erfolgen kann, wobei die Verzögerung der Sprachdaten im System minimal sein bzw. in der Größenordnung von Bruchteilen einer Millisekunde liegen soll, wobei ein synchroner Betrieb von redundanten Systemteilen erreicht werden soll bzw. die gleichen Ergebnisse immer in der selben zeitlichen Abfolge von redundanten Baugruppen und Verarbeitungseinheiten geliefert werden sollen, und wobei eine Fehlerkennung bzw. Fehlermaskierung möglich und keine Rekonfiguration im Falle eines Fehlers notwendig sein soll.

Der Einsatz des erfindungsgemäßen Kommunikationsnetzwerkes und des erfindungsgemäßen Verfahrens soll insbesondere bei Flugsicherungsanlagen bzw. bei Sprachvermittlungssystemen erfolgen, bei denen auf die Übertragung von Sprachdaten und auf höchste Zuverlässigkeit besonders Wert gelegt wird.

Erfindungsgemäß werden diese Ziele bei einem Verfahren der eingangs genannten Art durch die im Kennzeichen des Patentanspruches 1 angeführten Merkmale gelöst. Ein Kommunikationsnetzwerk der eingangs genannten Art ist durch die im Kennzeichen des Patentanspruches 9 aufscheinenden Merkmale charakterisiert.

Zur Lösung der gestellten Aufgaben werden über die Knoten des Ringsystems jeweils mehrfach verbindende, separate Übertragungsmedien alle Daten redundant transportiert und aufgrund der mehrfach vorgesehenen Punkt-zu-Punkt-Verbindungen zwischen den einzelnen Knoten können Fehlübertragungen erkannt und/oder maskiert werden. Der Datentransport erfolgt rasch und zuverlässig und ein Ausbau bzw. eine Umkonfiguration des Netzwerkes ist einfach möglich.

Als Übertragungsmedium können Drahtleitungen, Lichtleiter aber auch Sendestrecken eingesetzt werden. Die Anzahl der im Ringsystem möglichen Knoten kann groß sein, da die Übertragung innerhalb eines Knotens sehr rasch vor sich geht.

Dreifach redundante Punkt-zu-Punkt-Verbindungen zwischen den Knoten des Ringsystems sind das Mindesterfordernis bei dem erfindungsgemäßen Kommunikationsnetzwerk; es ist ohne weiteres möglich, auch vier oder mehr, vorzugsweise aber eine ungerade größere Anzahl von Übertragungsmedien vorzusehen, die von jeweils einem Knoten abgehen und an eine entsprechende Anzahl von im Ringsystem nachfolgenden Knoten angeschlossen ist. Eine ungerade Anzahl ist in Hinblick auf das vorgesehene Voting der übertragenen Daten von Vorteil.

Der Redundanzgrad des Kommunikationsnetzwerkes ist durch die Anzahl der von den einzelnen Knoten zu anderen Knoten abgehenden bzw. der Anzahl der von anderen Knoten abgehenden und bei diesem Knoten eintreffenden Übertragungsmedien bestimmt.

Die Kommunikation zwischen den Knoten erfolgt in Frames z.B. mit einer Länge von 125 Mikrosekunden. In jedem Frame können z.B. 2000 Timeslots zu je 8 bit übertragen werden, die jeweils entweder als Sprachkanal oder als Datenkanal definiert sein können. Während Sprachdaten ohne weitere Struktur in Rahmen aufgegeben und übertragen werden und dadurch die Verzögerung der Sprache im Ring in diesem Fall 125 Mikrosekunden nicht übersteigt, werden für die Datenübertragung Superframes mit einer Länge von z.B. einer Millisekunde vorgesehen. In jedem dieser Superframes wird in jedem Datenkanal in den acht aufeinanderfolgenden Rahmen eines Superframes je ein Byte eines Datenpaketes mit der Länge von insgesamt acht Bytes übertragen. Da jedem Knoten exklusiv ein oder mehrere Datenkanäle bzw. Rahmenbereiche zugewiesen sind, in denen er an alle anderen Knoten Broadcast-Nachrichten senden kann, ist die Kommunikation blockierungsfrei. Dabei wird die Flußkontrolle implizit durchgeführt, d.h., jeder Knoten sendet nur soviele Daten wie der empfangende Knoten verarbeiten kann. Es ist möglich, die Länge der Frames und die des Superframes und die Länge der Timeslots abzuändern.

In jedem Fall kann durch die zumindest dreifach redundante Weiterleitung der Daten hinsichtlich der Zuverlässigkeit der Datenweiterleitung ein beträchtlicher Vorteil gezogen werden; der Ausfall von zwei hintereinanderliegenden Knoten kann kompensiert werden. Besonders vorteilhaft ist es, wenn man gemäß den Merkmalen des Patentanspruches 2 vorgeht bzw. die Merkmale des Patentanspruchs 10 vorsieht. Auf diese Weise wird erreicht, daß eine beliebige Anzahl von Crash-Fehlern von Knoten toleriert werden kann, solange nicht eine Anzahl von im Ringsystem aufeinanderfolgenden Knoten ausfällt, welche dem Redundanzgrad des Ringes, welcher Redundanzgrad sich entsprechend der Anzahl der von jedem Knoten abgehenden Punkt-zu-Punkt Verbindungen definiert, entspricht. Beliebige Knotenfehler können toleriert werden, solange bei jeweils weniger als der Hälfte von unmittelbar aufeinanderfolgenden Knoten, deren Anzahl dem Redundanzgrad des Ringes entspricht, diese Fehler auftreten. Das Ringsystem kann ohne Beeinträchtigung eines Knotens mindestens soviele Leitungsausfälle tolerieren, wie sie dem um eins verringerten Redundanzgrad des Ringes entsprechen. Ohne die Kommunikation zu unterbrechen, kann das erfindungsgemäße Kommunikationsnetzwerk jedoch mindestens eine Anzahl von Leitungsausfällen tolerieren, die dem doppelten Redundanzgrad verringert um eins entspricht, in welchem letzteren Fall jedoch bis zu zwei Knoten nicht mehr erreichbar sind.

Durch die mehrfache Redundanz der Übertragung können verfälschte Daten auf zumindest einem Übertragungsmedium durch Voting erkannt und ausmaskiert werden, ohne die Übertragung unterbrechen zu müssen.

Ein wesentlicher Vorteil des erfindungsgemäßen Kommunikationsnetzwerkes ist jedoch die Toleranz eines beliebigen Fehlverhaltens eines Knotens. Im erfindungsgemäßen Kommunikationsnetzwerk hat ein beliebiges Fehlverhalten eines Knotens keine Auswirkungen auf andere Systemkomponenten bzw. Knoten, da durch die Mehrfachübertragung der Daten und deren Voting noch immer eine ausreichende Anzahl von redundanten Übertragungen ausgewertet werden kann und somit das Fehlverhalten eines Knotens maskiert wird. Da die Fehlerwahrscheinlichkeit von Knoten sehr gering ist und eine Wahrscheinlichkeit für einen Fehler in einer Anzahl von unmittelbar aufeinanderfolgenden Knoten nahezu vernachlässigbar ist, ergibt sich eine ausgesprochen sichere und zuverlässige Datenübertragung.

In jedem Knoten wird ein Voting über die über die einzelnen Übertragungsmedien einlangenden Daten durchgeführt und der unter Einhaltung der Votingbedingungen ermittelte bzw. resultierende Wert entnommen und/oder weitergesendet. Dadurch wird garantiert, daß beliebige Einfachfehler am Übertragungsmedium ausmaskiert werden. Weiters können beliebig viele Fehler, die bei unterschiedlichen Takten an den jeweiligen Übertragungsmedien auftreten, toleriert werden, ebenso wie Fehler, die im gleichen Takt an den bei unterschiedlichen Knoten einlangenden Übertragungsmedien auftreten.

Eine einfache Synchronisation der Takte der einzelnen Knoten des Ringsystems wird erreicht, wenn gemäß den Merkmalen des Patentanspruches 4 vorgegangen wird. Es werden dabei die Nennfüllgrade der FlFO-Pufferspeicher einem Voting unterzogen und soferne eine Mehrzahl der Pufferspeicher den an ihre Nennfüllgrade gestellten Anforderungen entspricht, gilt dies für eine korrekt bzw. synchron erfolgende Signalübertragung bzw. die einlangenden Daten werden als zeitrichtig eingelangt angesehen.

Die erfindungsgemäße Struktur bzw. Vorgangsweise ist besonders dazu geeignet, die Ergebnisse von in aufeinanderfolgenden Knoten redundant arbeitenden Einheiten, insbesondere Prozessoren, zu überprüfen, wozu erfindungsgemäß gemäß Patentanspruch 7 vorgegangen wird. Aufgrund der durch Voting überprüften Übereinstimmung der von den einzelnen Prozessoren in den Übertragungsrahmen eingespeisten Daten kann das übereinstimmende Arbeiten von einer Mehrzahl von Prozessoren in einfacher Weise festgestellt werden.

Schließlich erfüllt die erfindungsgemäße Vorgangsweise bzw. das erfindungsgemäße Kommunikationsnetzwerk die Bedingungen, die an ein sogenanntes "Atomic-Broadcast"-Übertragungsprotokoll gestellt werden und zwar dann, wenn gemäß den Merkmalen des Anspruches 8 vorgegangen wird.

Weitere vorteilhafte Ausführungsformen der Erfindung sind der folgenden Beschreibung, sowie den Zeichnungen und den Patentansprüchen zu entnehmen.

Es zeigen Fig. 1 schematisch zwei miteinander verbundene Ringsysteme, Fig. 2 schematisch die Funktionsweise eines Voters, Fig. 3 schematisch die Überprüfung des Nennfüllgrades von Pufferspeichern zur Erzielung einer Taktsynchronisation der Knoten im Ringsystem, Fig. 4 schematisch eine Möglichkeit für eine Datenübertragung, Fig. 5 schematisch den Aufbau eines der im Ringsystem vorgesehenen Knoten, Fig. 6 schematisch den Aufbau und die Weiterleitung eines Übertragungsrahmens und Fig. 7 ein Schaltungsdetail.

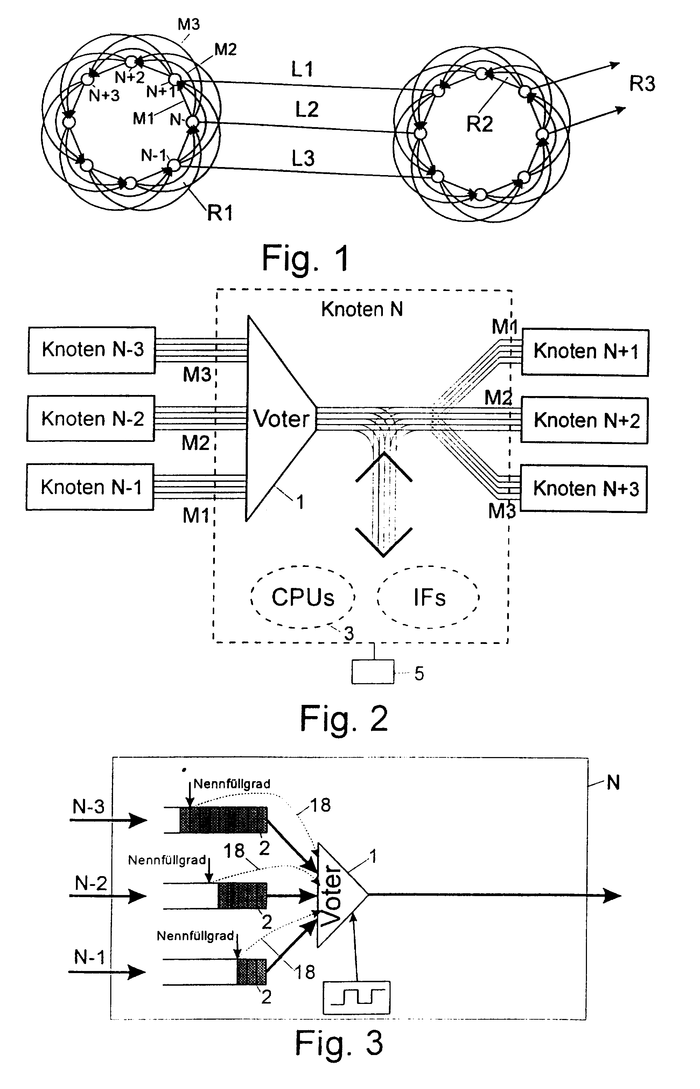

Fig. 1 zeigt schematisch zwei erfindungsgemäße Kommunikationsnetzwerke bzw. Ringsysteme R1 und R2, die über Übertragungsmedien L1, L2 und L3, z.B. Lichtleiter, verbunden sind. Jedes derartige Ringsystem R1 und R2 kann für sich allein existent sein oder mit weiteren derartigen Systemen oder auch mit anderen Kommunikationsnetzwerken verbunden sein, wie beispielsweise mit den zu R3 weisenden Pfeilen angedeutet ist. Jedes erfindungsgemäße Kommunikationsnetzwerk umfaßt einen zumindest dreifach redundant aufgebauten Ring, in dem eine Anzahl von Knoten N-1, N, N+1, N+2 usw. hintereinander durch Punkt-zu-Punkt Verbindungen verbunden ist. Jeder der einzelnen Knoten des Ringsystems ist über jeweils ein Übertragungsmedium M1, M2, M3 mit jeweils zumindest drei nachfolgenden Knoten über Punkt-zu-Punkt Verbindungen direkt verbunden; gleichzeitig ist jeder Knoten mit zumindest drei vorangehenden Knoten über Punkt-zu-Punkt Verbindungen verbunden ist. Die Anzahl der Vorwärtsverbindungen ist naturgemäß gleich der Anzahl der Rückwärtsverbindungen und bestimmt den Redundanzgrad des Netzwerkes.

Die Anzahl der Knoten im Ringsystem kann nach Bedarf gewählt werden; die einzelnen Knoten können auch mit einer größeren Anzahl vorangehender und folgender Knoten über Punkt-zu-Punkt Verbindungen verbunden sein. In der vorliegenden Beschreibung wird ein Kommunikationsnetzwerk beschrieben, bei dem die einzelnen Knoten jeweils mit drei unmittelbar vorangehenden und drei unmittelbar nachfolgenden Knoten über Übertragungsmedien M1, M2 und M3 verbunden sind. Drei ist die Mindestanzahl der redundanten Übertragungsmedien zur Durchführung eines Votings.

Die beiden in Fig. 1 dargestellten Ringsysteme R1 und R2 sind über drei Leitungen L1, L2, L3 verbunden; prinzipiell würde es auch genügen, diese Ringsysteme über eine Leitung zu verbinden; aus Redundanzgründen kann jedoch die Leitung verdoppelt oder wenn man sich die Vorteile des erfindungsgemäßen Votings zunutze machen will, können die beiden Ringstrukturen R1 und R2 über drei Leitungen L1, L2 und L3 verbunden werden, die jeweils unterschiedliche aufeinanderfolgende Knoten der beiden Ringsysteme miteinander mit Punkt-zu-Punkt-Verbindungen verbinden.

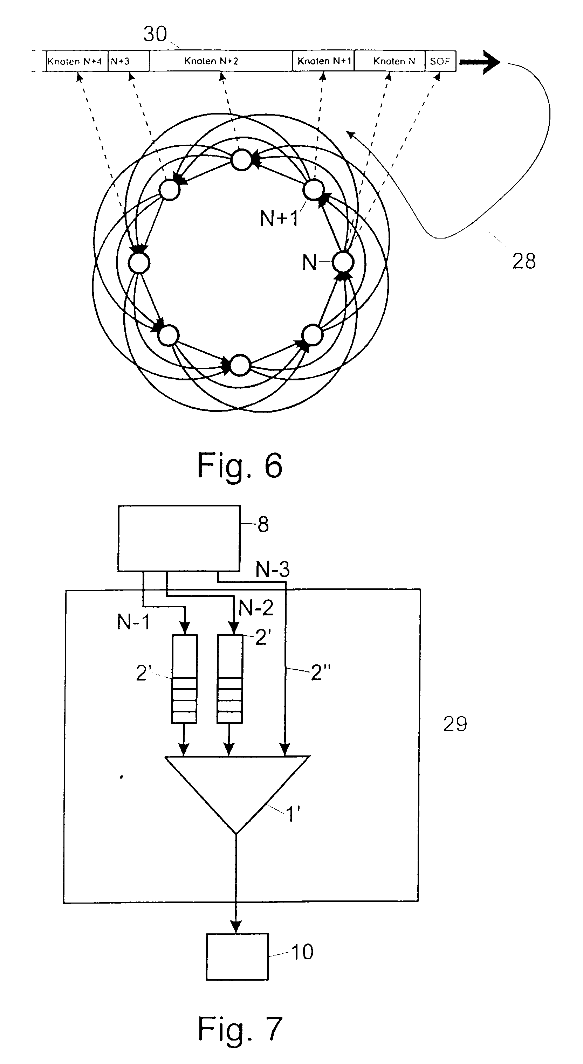

Die Kommunikation zwischen den einzelnen Knoten erfolgt über weitergeleitete Rahmen, in die von den einzelnen Knoten Daten eingegeben oder aus denen von den Knoten Daten entnommen werden. Jedem Knoten wird z.B. von einer für alle Knoten relevanten, externen oder einer knoten internen Steuereinheit ein bestimmter Rahmenbereich nach Bedarf zugeordnet, um so die Menge der bei den einzelnen Knoten anfallenden Daten zu berücksichtigen. Die den einzelnen Knoten im Rahmen zugeordneten Rahmenbereiche entsprechen in ihrer Reihenfolge der Reihenfolge der Knoten im Ring (Fig.6). In Fig. 6 ist ein umlaufender Rahmen 30 schematisch dargestellt, der z.B. vom Knoten N erzeugt und in Richtung des Pfeiles 28 im Ring umläuft. Sobald der erste sendende bzw. auf den Übertragungsrahmen Daten einspeisende Knoten N seinen Bereich gefüllt hat, kann der im Ringsystem nachfolgende Knoten N+1 beginnen, auf den weitergeleiteten Übertragungsrahmen seine Daten einzuspeisen, bis der diesem Knoten N+1 zur Verfügung gestellte Bereich ausgenutzt worden ist. Daraufhin beginnt der nächstfolgende Knoten N+2 die Daten einzuspeisen usw.

Da alle von einem Knoten N abgehenden Übertragungsrahmen in jeweils identer Form den im vorliegenden Fall drei unmittelbar nachfolgenden Knoten N+1, N+2, N+3 direkt zugeführt werden, erhält jeder Knoten von drei unmittelbar vorangehenden Knoten direkt die von diesen drei Knoten ausgehenden Übertragungsrahmen zugeführt. Jeder Knoten leitet die einlangenden Übertragungsrahmen gegebenenfalls nach Entnahme seiner nach einem Ringumlauf wieder einlangenden eigenen Daten und gegebenenfalls Eingabe von anderen eigenen Daten wieder an drei nachfolgenden Knoten weiter. Es ist vorgesehen, daß jeder Knoten die von ihm abgesendeten Daten nach einem Ringumlauf des Rahmens wieder zurückerhält, sodaß es diesem Knoten möglich ist, einen Vergleich der von ihm abgesendeten und der wiedereinlangenden Daten vorzunehmen.

Jeder Knoten überprüft die von den drei vorangehenden Knoten über die Übertragungsmedien M1, M2 und M3 einlangenden drei Übertragungsrahmen hinsichtlich der Übereinstimmung der von ihnen jeweils mitgeführten Daten. Fig. 2 zeigt schematisch einen Knoten N, der von den Knoten N-1, N-2 und N-3 über die Übertragungsmedien M1, M2 und M3 Übertragungsrahmen erhält, die z.B. vom Knoten N+1 als Startknoten generiert wurden und die im Knoten N einem Voter 1 zugeführt sind. In dem Voter 1 erfolgt ein Vergleich der auf den drei Übertragungsrahmen einlangenden Daten und im Falle einer Übereinstimmung der Daten aller Übertragungsrahmen bzw. eines Mehrheitsergebnisses, d.h., daß auf der Mehrzahl der Übertragungsrahmen die Daten übereinstimmen, werden diese so gewerteten Daten als richtig übertragen befunden und an die Peripherieeinheiten 3 und/oder daran angeschlossene User 5 weitergegeben, d.h. , die Daten, die für den Knoten N bestimmt sind, werden dem Übertragungsrahmen entnommen und verwertet. Danach werden in den Übertragungsrahmen vom Knoten N seine eigenen abzusendenden Daten eingespeist und der Übertragungsrahmen wird über die drei Übertragungsmedien M1, M2 und M3 jeweils direkt an die Knoten N+1, N+2 und N+3 weitergeleitet.

Aufgrund des Vergleiches der Übertragungsrahmen bzw. der Daten im Voter 1 können Fehler auf einem Übertragungsmedium maskiert werden bzw. ein Ausfall eines vorangehenden Knotens spielt keine Rolle, soferne die auf den beiden verbleibenden Übertragungsmedien einlangenden Daten übereinstimmen. Im Knoten N liegen somit als richtig bewertete Daten vor, die dem Übertragungsrahmen entnommen werden können. Treffen nur auf einem Übertragungsmedium Daten ein, so werden diese als richtig bewertet; treffen nur auf zwei Übertragungsmedien Daten ein, die aber unterschiedlich sind, so wird ein Datensatz verworfen und zwar der Datensatz, der über eine größere Anzahl vorangehender Knoten eingelangt ist.

Es wird nochmals bemerkt, daß nicht unbedingt nur eine Verdreifachung der Übertragung bzw. nur drei Übertragungsmedien vorgesehen bzw. der Voter 1 für einen Vergleich von nur drei Übertragungsrahmen eingerichtet sein muß; es kann jede beliebige größere Anzahl von redundanten Übertragungen dem erfindungsgemäßen Ringsystem bzw. dem Voting zugrundegelegt werden. Je größer die Anzahl der parallel übertragenen und verglichenen Übertragungsrahmen ist, umso sicherer wird das System bzw. umso zuverlässiger können Fehler maskiert oder überbrückt bzw. ausgeschaltet werden. Der damit verbundene konstruktive Aufwand wird durch die erhöhte Zuverlässigkeit wettgemacht.

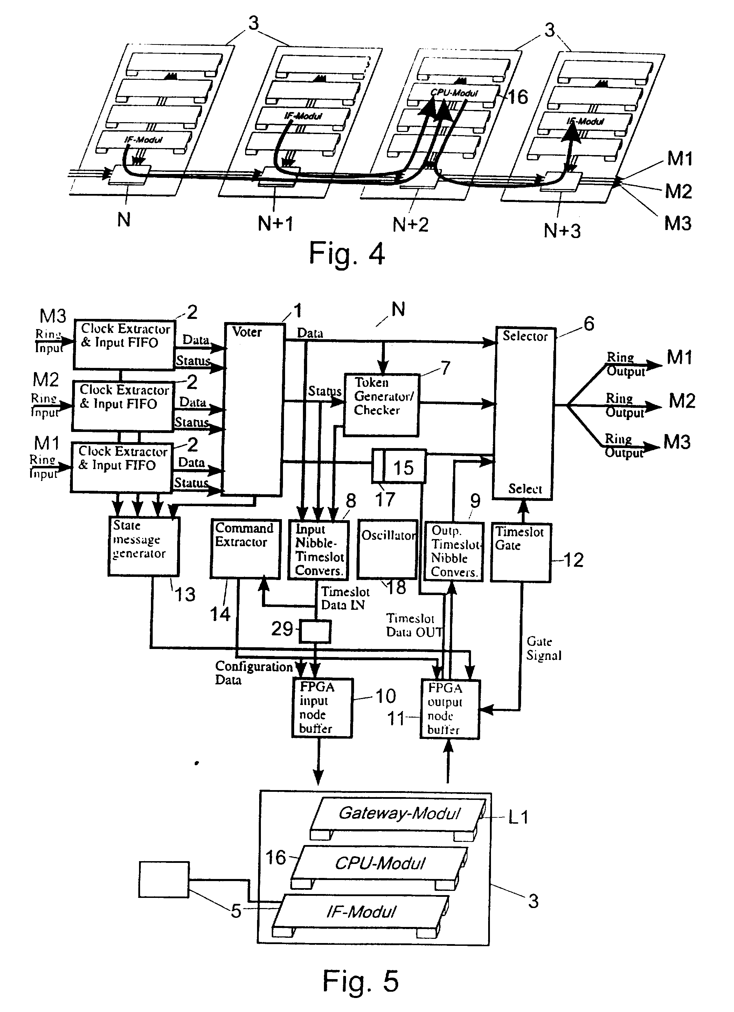

Wie in Fig. 5 dargestellt, erhält jeder Knoten N über die Übertragungsmedien M1, M2, M3 die von den vorangehenden Knoten des Ringsystems weitergeleiteten oder abgesandten Übertragungsrahmen und führt in dem Voter 1 ein entsprechendes Voting durch. In jedem Knoten N befinden sich Netzwerkcontroller bzw. FPGA bzw. ASIC-Bauteile 10, mit denen die im Voter 1 als richtig bewerteten Daten ausgekoppelt bzw. an Peripheriebauteile 3 weitergegeben werden können. In gleicher Weise können über entsprechende Peripheriebauteile 3, und den Netzwerkcontroller 11 Daten in den Übertragungsrahmen aufgegeben werden, der von einem Selector 6 an die von dem Knoten N abgehenden Übertragungsmedien M1, M2 und M3 aufgegeben wird.

Die in jeden Knoten N zur Kommunikation vorgesehenen Bauteile können verschiedenen Aufbau haben; in Frage kommen als Peripheriebauteile 3 z.B. IF-Module, Prozessoren bzw. CPU-Module, Gateway-Module und sämtliche weiteren für die Datenverarbeitung und -weiterleitung geeigneten Bauteile. IF-Module ermöglichen, die von Telephonieanlagen 5, Sendestationen, Telekommunikationsanlagen od.dgl. kommende Daten in entsprechender Form in den Ring einzukoppeln.

Die als Peripheriebauteile 3 des Knotens N vorgesehenen Prozessormodule 16 bzw. knoteninterne Rechner dienen wie Fig. 4 beispielsweise zu entnehmen ist, vor allem zur Vornahme von netzwerkinternen Berechnungen, wozu beispielsweise von vorangehenden Knoten N, N+1 dem Prozessormodul 16 eines folgenden Knotens N+2 Daten zugeleitet werden, in dem diese Daten Grundlage eines Rechenvorganges sind, wobei die Ergebnisse dieser Berechnung dem nächstfolgenden Knoten N+3 übertragen werden.

Gateway-Module dienen zur Verbindung erfindungsgemäßer Kommunikationsnetzwerke untereinander oder mit anderen Kommunikationsanlagen bzw. - netzen. Die über die Verbindungsleitungen L1, L2, L3 zwischen den Netzwerken, wie sie z.B. in Fig. 1 dargestellt sind, gesandten Daten können in jeder Ringstruktur gevotet werden, womit die Übereinstimmung der Daten, der auf den die Ringstrukturen R1 und R2 verbindenden jeweiligen Leitungen L1, L2 und L3 beurteilt werden kann.

Der Knoten N gemäß Fig. 5 erhält über die Übertragungsmedien M1, M2, M3 von vorangehenden Knoten N-1, N-2 und N-3 abgehende, z.B. vom Knoten N+1 oder N+2...generierte Übertragungsrahmen, bei denen die den einzelnen Knoten zugeordneten Rahmenbereiche mit Daten oder Leertakten gefüllt sind. Da es bei Durchlaufen des Ringes aufgrund von Frequenzschwankungen zu Taktzeitverschiebungen kommen kann, sind die einzelnen Übertragungsmedien M1, M2, M3 jeweils über einen elastischen Pufferspeicher 2 an den Voter 1 angeschlossen. Diese elastischen Pufferspeicher bzw. FlFO-Pufferspeicher 2 werden mit der dem Voter 1 vorgegebenen, knoteninternen Taktfrequenz gleichzeitig ausgelesen und die einzelnen ausgelesenen Daten werden einem Voting unterzogen. Soferne ein Voting erfolgreich möglich ist, d.h., die auf den einzelnen Leitungen einlangenden Daten übereinstimmen oder eine Mehrheitsentscheidung möglich ist oder nur auf einem einzigen Übertragungsmedium Daten eintreffen, werden diese Daten als richtig gewertet und über einen Input Nibble-Timeslot Converter 8 dem FPGA 10 zur Datenentnahme zugeführt. Des weiteren können in die dem Knoten N zugeordneten Bereiche des Übertragungsrahmens über den FPGA 11, den Output Timeslot-Nibble Converter 9 und den Selector 6 entsprechende Daten aufgegeben werden. Der Knoten N sendet den Übertragungsrahmen weiter, der jeweils über die einzelnen Medien M1, M2, M3 einer entsprechenden Anzahl von nachfolgenden Knoten zugeführt wird. Der Rahmentakt bzw. der Datentakt wird von einem Timeslot Gate 12 überwacht. Das Timeslot Gate 12 dient zur Synchronisation des Selektors 6 und des FPGA 11. Ein Taktgenerator bzw. Oszillator 18 stellt den Systemtakt zur Verfügung. Mit dem 18 wird die Takffrequenz sämtlicher Bauteile des Knotens gesteuert, z.B. auch die Absendung von Übertragungsrahmen über den Selektor 6 an die den Knoten N verlassenden Übertragungsmedien M1, M2, und M3. Der Oszillator 18 ist an sämtliche Einrichtungen des Knotens angeschlossen bzw. gibt diesen den Takt vor.

Um Taktabweichungen zwischen einzelnen Übertragungsrahmen aufgrund voneinander abweichender Knotentakte kompensieren zu können, wird der Nennfüllgrad der einzelnen dem Voter 1 vorgeschalteten FIFO-Pufferspeicher 2 abgefühlt und das entsprechende Statussignal dem Voter 1 und/oder dem state message-Generator 13 zugeführt, die gegebenenfalls in die Knotensteuerung integriert sind. Fig. 3 erläutert diese Vorgangsweise. Aufgrund des Durchlaufens einer unterschiedlichen Anzahl von Knoten langen die auf den einzelnen Übertragungsmedien M1, M2, M3 einlangenden Rahmen bzw. gleiche Daten zu unterschiedlichen Zeiten ein, da jeder Übertragungsrahmen beim Durchlaufen eines Knotens um eine bestimmte Zeitspanne verzögert wird. Um diese Zeitspannen auszugleichen, werden die Daten in den FlFO-Pufferspeichern 2 zwischengespeichert und füllen die einzelnen Pufferspeicher 2 in verschiedenem Ausmaß auf. Da die Nenntaktanzahl des Übertragungsrahmens und die Taktfrequenz der Knoten bzw. die Zeitverzögerungen vorgegeben sind, kann jedem Pufferspeicher 2 ein Nennfüllgrad vorgegeben werden und dieser Nennfüllgrad wird abgefühlt, so wie es in Fig. 3 dargestellt ist, indem über entsprechende Leitungen 18 die Signale dem Voter 1 oder einer Knotensteuerung bzw. dem Generator 13 zur Überprüfung zugeführt werden. Eine Weitergabe der in den Pufferspeichern 2 anliegenden Daten an den Voter 1 erfolgt dann, wenn alle oder die Mehrheit der bzw. im vorliegenden Fall zumindest zwei der vorgesehenen drei Pufferspeicher 2 nach Ablauf einer Mindestzeit den Nennfüllgrad erreicht haben. Wenn eine Mehrheitsentscheidung über den Nennfüllgrad der Pufferspeicher getroffen wird, werden die Daten der Pufferspeicher, die den Nennfüllgrad nicht erreicht haben, unberücksichtigt gelassen bzw. verworfen.

Es ist möglich, daß eine Weitergabe der in den Pufferspeichern gespeicherten Daten zu einem Zeitpunkt begonnen wird, wenn bei allen Pufferspeichern 2 der Nennfüllgrad erreicht ist; auf jeden Fall wird jedoch mit einer Weitergabe der Daten begonnen, wenn die Mehrheit der FlFO-Pufferspeicher 2 den Nennfüllgrad erreicht hat.

Des weiteren ist vorgesehen, daß die zwischengespeicherten Daten aus den einzelnen, unterschiedlichen Nennfüllgrad besitzenden FlFO-Pufferspeichern 2 dem Voter 1 im Gleichtakt erst dann weitergegeben werden, wenn innerhalb eines, vorzugsweise einem Rahmentakt entsprechenden, Zeitfensters vor Ablauf einer Zeitspanne, die der Summe der Taktzeiten aller Takte des Rahmens entspricht, alle oder eine Mehrheit der vorgesehenen FlFO-Pufferspeicher 2 ihren Nennfüllgrad erreicht hat. Damit ist eine untere Zeitschwelle gesetzt. Wenn weiters vorgesehen ist, daß ein Auslesen in den Voter immer dann beginnt, wenn diese Zeitspanne, um einen gewissen Wert, vorzugsweise um einen Takt, überschritten ist, so wird der Datenweitergabe eine obere Zeitschwelle vorgegeben.

Es ist dabei zweckmäßig, daß mit einer Weitergabe der Daten frühestens nach Ablauf des vorletzten Taktes des vorhergehenden Rahmens begonnen wird, d.h., daß das Zeitfenster maximal zwei Takte beträgt bzw. die Zeitspanne für einen Rahmenumlauf nur um maximal einen Takt unterschritten bzw. überschritten werden darf.

Es wird somit als Bedingung für ein korrektes Eintreffen und eine korrekte Weitergabe der Daten aus den Pufferspeichern 2 an den Voter 1 nicht nur gefordert, daß zumindest die Mehrheit der Pufferspeicher 2 den Nennfüllgrad erreicht hat, sondern auch, daß eine Weitergabe nur innerhalb eines Zeitfensters erfolgen darf. Auf diese Weise können Taktverluste bei der Übertragung im Ring in gewissem Ausmaß toleriert werden und es erfolgt eine Synchronisation der Taktfrequenzen, mit der die einzelnen Knoten arbeiten, ohne daß eine zentrale Synchronistion erforderlich wäre.

Das Voting der Nennfüllgrade funktioniert allerdings im Knoten N nicht, wenn von den Knoten N-1 bzw. N-2 ein Übertragungsrahmen weitergegeben wird, da dem Knoten N die Daten aus N-1 bzw. N-2 vorerst nur mit einem bzw. zwei Übertragungsrahmen zugeführt sind und die beiden weiteren bzw. der dritte für das Voting benötigte Übertragungsrahmen erst nach einem Ringumlauf beim Knoten N eintreffen.

Aus diesem Grund kann ein weiterer Mechanismus zur Fehlertoleranz eingeführt werden, der sich die definierte Genauigkeit der freilaufenden Knotentakte zunutze macht. Der umlaufende Übertragunsrahmen hat eine Nenntaktfrequenz, beispielsweise 4000 Takte, in einem Frame bestimmter Länge, z. B. 125 µs, bei einer Nennfrequenz, z.B. 32 MHZ. Der Startknoten bzw. der Knoten N beginnt nun nach einer exakt der Nenntaktauswahl eines Rahmens entsprechenden Taktanzahl bzw. einer entsprechenden Zeitspanne, z.B. alle 4000 Takte, ein neues Frame zu senden. Die Absendung bzw. Generierung dieses neuen Übertragungsrahmens erfolgt unter der Steuerung des Generators 7, wobei im Selektor 6 entsprechende Daten des Knotens bereits aufgegeben werden können. Für den Fall, daß der Nennfüllgrad einer Mehrzahl von Pufferspeichern 2 zum spätestmöglichen Zeitpunkt nicht erreicht wird, wird von diesem Knoten N ein neuer Übertragungsrahmen weitergeleitet. Es kann dabei als weitere Bedingung vorgesehen sein, daß in jedem Knoten N die Anzahl der Takte pro Übertragunsrahmen nur in einer bestimmten Anzahl von Übertragungsrahmen, z. B. maximal jeden fünften Übertragungsrahmen, von der Nennzahl um einen Takt abweichen darf. Soferne diese Bedingung nicht eingehalten wird und trotz dieser Begrenzung ein Pufferspeicher entweder zu voll oder zu leer wird, kann das diesem Pufferspeicher 2 zugeordnete Übertragungsmedium abgeschaltet werden. Werden alle Pufferspeicher zu voll oder zu leer, so kann dies als Fehler im eigenen Knoten erkannt werden und dieser schaltet sich selbst ab.

Auf diese Weise ist es möglich, daß systematische Fehler und die Temperaturabweichung der in den Taktgeneratoren verwendeten Schwingquarze kompensiert werden, auch wenn diese in allen Knoten mit gleicher Charakteristik bzw. in denselben Gehäusen unter ähnlichen Temperaturbedingungen arbeiten. Zusätzlich kann jedoch auch noch eine externe Synchronisation der Taktfrequenzen vorgenommen werden.

In Fig. 6 ist ein Beispiel für einen im Kommunikationsnetzwerk umlaufenden Übertragungsrahmen 30 dargestellt. Der Übertragungsrahmen wird beispielsweise im Knoten N generiert. Anschließend an ein SOF sind Rahmenbereiche für die Eingabe und Entnahme von Daten für die einzelnen Knoten festgelegt.

Alle Knoten sind entsprechend ihrer Reihenfolge im Ringsystem durchgehend numeriert bzw. gekennzeichnet und entsprechend dieser Reihenfolge koppeln sie auch ihre Daten in den Übertragungsrahmen ein. Es ergibt sich damit ein Kommunikationsmechanismus, bei dem der Startknoten N, z. B. alle 125 µs, mit dem Senden eines neuen Übertragungsrahmens beginnt. Dazu sendet er zuerst den Start of Frame (SOF)-Code und anschließend seine Daten. Jeder Knoten empfängt somit zuerst die Daten aller seiner Vorgängerknoten, führt für diese Daten ein Voting aus und sendet diese Daten sodann weiter. Nachdem er die Daten aller Vorgängerknoten empfangen hat, beginnt er selbst seine Daten zu senden.

Jeder Knoten N entfernt die von ihm gesendeten Daten wieder aus dem Ring und ferner werden Daten, die von Knoten abgesendet werden, die dem diese Daten primär erzeugenden Knoten N im Ring vorangehend angeordnet sind, in jedem dem sendenden Knoten N im Ring nachgelagerten Knoten entfernt. Dadurch wird verhindert, daß dieselben Daten dauernd im Ring umlaufen.

Nach Beendigung der Eingabe der knoteneigenen Daten und vor dem Empfang der Daten eines nachfolgenden Knotens tritt eine Zeitspanne ein, nämlich die Zeit, die die Daten zum Durchlaufen des Ringes benötigen, in der keine sinnvollen Daten zu senden sind. In dieser Zeit werden EMPTY-Codes gesendet.

Nachdem die Daten des dem Startknoten unmittelbar vorangehenden Knotens empfangen und weitergesendet worden sind, werden wieder so lange EMPTY-Codes gesendet, bis der Beginn eines neuen Frame empfangen wird. Auf jeden Fall ist jedoch der letzte Takt des Rahmens ein Leertakt, um die zuvor beschriebene Synchronisation vornehmen zu können bzw. es zu ermöglich, daß die FIFO-Pufferspeicher 2 in dem vorgesehenen Zeitfenster mit der Übertragung an den Voter 1 beginnen, wenn die Mehrzahl der Pufferspeicher ihren Nennfüllgrad erreicht haben.

Wenn in einer Anzahl von im Ringsystem unmittelbar hintereinanderliegenden Knoten jeweils zumindest ein CPU- bzw. Datenprozessor (-modul) 16 angeordnet ist, können zum Vergleich der von den einzelnen redundant arbeitenden Prozessoren 16 als Resultat ihrer Tätigkeit ermittelten Daten diese Daten in den jeweils aufeinanderfolgenden Knoten in jeweils ein und denselben Rahmenbereich ein und desselben umlaufenden Rahmens aufgegeben werden, sodaß die Daten der redundanten Prozessoren beim Ringdurchlauf im Hinblick auf ihre Übereinstimmung gevotet werden können. Aufgrund des in den einzelnen Knoten vorgenommenen Votings wird es möglich, die von den redundant arbeitenden Prozessoren, insbesondere die für den Betrieb des Kommunikationssystems ermittelten Daten, hinsichtlich ihrer Übereinstimmung zu überprüfen. Wenn es sich um im Kommunikationsnetzwerk arbeitende Prozessoren handelt, ist aufgrund des Voting in den einzelnen Knoten sichergestellt, daß die Prozessoren übereinstimmende Daten zur Abarbeitung erhalten, sodaß letztlich auch die Ergebnisse übereinstimmen müßten, was durch Voting überprüft wird. Zur Durchführung des Voting der übertragenen Daten werden die redundanten Prozessoren in unmittelbar hintereinander im Ring liegenden Knoten angeordnet, wobei jeder der redundanten Prozessoren seine Daten nicht in jeweils knoteneigene Timeslot- bzw. Rahmenbereiche, sondern aufgrund der Rahmenbereichszuordnung in dieselben Rahmenbereiche eines Rahmens eingibt, was bedeutet, daß die Daten des redundanten Prozessors des Vorgängerknotens nicht weiter gesendet, sondern durch die Daten des dem jeweiligen Knoten zugehörigen Prozessors ersetzt werden. Der in der Ringstruktur verwirklichte Voting-Mechanismus wählt sodann automatisch die korrekten Daten aus.

Es ist ersichtlich. daß basierend auf dem in der Ringstruktur bzw. in dem erfindungsgemäßen Kommunikationsnetzwerk vorgesehen Voting-Mechanismus auch die Ergebnisse bzw. Daten anderer redundant arbeitender Bauteile gevotet und bewertet werden können.

Eine vorteilhafte Eigenschaft des erfindungsgemäßen Kommunikationssystems ist es, daß zur Erreichung einer Atomic-broadcast-Übertragung in jedem Knoten N die eigenen in einem Übertragungsrahmen aufgegebenen Daten gespeichert und mit den mit diesem Übertragungsrahmen nach einem Umlauf im Ringsystem wieder erhaltenen Daten verglichen werden können, wobei im Falle einer Nichtübereinstimmung der Daten von diesem Knoten N eine Fehlermeldung an alle Knoten übermittelt wird, aufgrund der die von diesem Knoten N abgegebenen und aufgrund des Vergleiches als unrichtig bewerteten Daten von allen Knoten verworfen bzw. als unrichtig bewertet werden. Für eine derartige Überprüfung sind in jedem Knoten N zumindest ein Speicher 15 für die von diesem Knoten aufgegebenen Daten vorgesehen und ferner ist ein an diesen Speicher 15 angeschlossener Vergleicher 17 vorgesehen, mit dem die gespeicherten Daten mit den in dem nach Durchlauf eines Ringes eintreffenden Übertragungsrahmen enthaltenen Daten verglichen werden. Sobald ein Knoten etwas anderes empfängt als er gesendet hat, sendet er anstelle der restlichen Datenbytes des Datenpaketes in den folgenden Rahmen des Superframes nur mehr DATA - ERROR -Codes an alle Knoten. Damit wird garantiert, daß entweder alle Knoten im Ringsystem ein ordnungsgemäßes Datenpaket empfangen oder in allen Knoten fehlerhafte Datenpakete verworfen werden. Zeitverzögerungen bei der Weitergabe der Daten bzw. Error-Signale im Ring werden durch Zuwarten mit der Verarbeitung der übermittelten Daten ausgeglichen.

Soferne ein Fehler erst im letzten Byte des Datenpaketes auftritt, so ist vorgesehen, daß das ACK/NAK-Bit im ersten Byte des nächsten Paketes, das im selben Datenkanal gesendet wird, zur Klärung der Situation herangezogen wird. Wenn ein Fehler in einem Datenpaket entdeckt worden ist, so setzt der sendende Knoten dieses Bit im nächsten Paket auf NAK (negative acknowledgement) und das Paket wird, sofern das nächste Byte kein DATA-ERROR-Code ist, verworfen.

Derartige Fehlermeldungen werden vom Vergleicher 17 entweder an die Knotensteuerung bzw. an den State-Message-Generator 13 und/oder an den FPGA 11 abgegeben und über den Selektor 6 dem nächsten Übertragungsrahmen aufgeprägt.

Wenn ein Knoten N mit der Weitergabe eines Übertragungsrahmens bzw. dem Absenden seiner Daten, beginnt, werden die von diesem Knoten N abgegebenen Timeslots an die folgenden Knoten weitergegeben und können beim Knoten N bereits wieder einlangen, bevor dieser mit dem Absenden aller Timeslots in seinem zugeordneten Framebereich fertig ist. Sobald der Knoten N seine Daten abgesendet hat, beginnt der Knoten N+1 die Daten in den Übertragungsrahmen einzuspeisen und durch den Ring zu senden. Wenn der Knoten N mit einer Übertragung beginnt, so erhält erst der Knoten N+X (X=Redundanzgrad) auf sämtlichen, bei diesem Knoten N+X einlangenden Übertragungsmedien, die vom Knoten N abgegebenen Daten einmal direkt und die anderen Male über eine entsprechende Anzahl dazwischenliegender Knoten. Somit ist in Vorwärtsrichtung des Ringes erst beim Knoten N+X die Durchführung eines Votings in der bisher beschriebenen Weise möglich. In den Knoten N+1 sowie N+2 könnte ein Voting der beschriebenen Art erst dann erfolgen, wenn der vom Knoten N abgegebenen Übertragungsrahmen den Ring durchlaufen hat und über den Knoten N an die Knoten N+1 bzw. N+2 weitergegeben wird. Ein derartiges Voting kann somit nur mit einer entsprechenden Zeitverzögerung vorgenommen werden. Aus diesem Grund wird nunmehr zur Durchführung eines Votings von Datensätzen, die von Knoten stammen bzw. erstmals von Knoten in den Ring aufgegeben werden, die in einem Abstand einem Knoten vorangehen, welcher Abstand kleiner als der Redundanzgrad des Ringes ist, ein spezielles Votingverfahren vorgenommen, das im folgenden beschrieben wird.

Betrachtet wird ein Ringsystem mit dem Redundanzgrad 3 und vorerst die Generierung eines Übertragungsrahmens im Knoten N-1.

Die eigenen Daten des Knotens N-1 werden dem Knoten N über ein Übertragungsmedium direkt zugeführt, der diese Daten in einem FlFO-Pufferspeicher 29 ablädt. Es wird nun solange zugewartet, bis die vom Knoten N-1 stammenden und direkt dem Knoten N+1 bzw. dem Knoten N+2 übergebenen Daten nach einem Ringumlauf beim Knoten N eintreffen. Es kann nunmehr vorgesehen sein, daß diese beiden Datensätze bei ihrem Eintreffen im Knoten N nach entsprechender Zwischenspeicherung in den FlFO-Pufferspeichern 2 im Voter 1 gevotet und im Falle einer Übereinstimmung direkt in den FPGA 10 geleitet werden, wobei die Daten im Speicher 29 gelöscht werden. Möglich wäre es auch, das Ergebnis dieses Votings mit den Daten im Speicher 29 nochmals zu vergleichen; da jedoch bereits zwei übereinstimmende Datensätze eingelangt sind, ist diese Vorgangsweise aber nicht unbedingt erforderlich.

Soferne die beiden dem Voting im Voter 1 unterzogen Datensätze ungleich sind, so könnten einer oder beide dieser Datensätze mit dem im Speicher 29 befindlichen Datensatz gevotet und das Ergebnis des Votings abgewartet werden; eine vorteilhafte Alternative sieht jedoch vor, daß im Falle, daß die beiden Datensätze als ungleich gevotet werden, die im Speicher 29 gespeicherten Daten direkt an den FPGA 10 abzugeben sind..

Es ist selbstverständlich, daß die Weitergabe, das Voting, das Ein- und Auslesen usw. von Daten taktgerecht und unter einer entsprechenden zeitlichen Steuerung erfolgt, um die Synchronisation der Bauteile der einzelnen Knoten und zwischen den Knoten nicht zu stören.

Der Speicher 29 kann Teil der FPGA 10 sein oder z.B. auch gemäß Fig. 7 ausgeführt sein. Der Speicher 29 umfaßt zwei FIFO-Pufferspeicher 2' und eine durchgehende Leitung 2", die zwischen den Input Nibble-Timeslot Converter 8 und den Voter 1' geschaltet sind. Die vom Knoten N-1 direkt kommenden Datensätze werden über den FIFO-Speicher 2 und den Voter 1 und den Converter 8 einem der FlFO-Speicher 2' zugeführt und die nach einem Ringumlauf eintreffenden Daten des Knotens N-1, die direkt von den Knoten N-2 und N-3 einlangen, werden ungevotet durch den Voter 1, aber allenfalls zeitgleich aufgrund des Durchlaufens der FIFO-Pufferspeicher 2, über den Speicher 29 dem Voter 1' zugeführt, damit ist ein Voting aller drei Datensätze möglich. Zu bemerken ist noch, daß es sich bei den auf dem einen FlFO-Speicher 2' anliegenden und bei dem auf der Leitung 2" geführten Datensatz um den vom Knoten N-1 abgegebenen Datensatz handelt, der nach einem Ring-Durchlauf vom Knoten N-2 bzw. vom Knoten N-3 jeweils direkt an den Knoten N übermittelt wurde.

Alternativ wäre es noch möglich, nur die beiden direkt von den Knoten N-2 und N-3 einlangenden Datensätze im Speicher 29 zu voten und bei Übereinstimmung den vom Knoten N-1 erhaltenen Datensatz zu verwerfen. Die Vorgangsweise hängt ab, wie die Zwischenspeicherung der Daten und die Weitergabe der umlaufenden Daten und der Beginn eines Votings einfach zeitlich aufeinander abgestimmt werden können.

Zur Bewertung der vom Knoten N-2 abgehenden bzw. von in diesem generierten Übertragungsrahmen weitergeleiteten Daten kann vorgesehen sein, daß im Knoten N die direkt an diesen Knoten N vom Knoten N-2 übermittelten Datensätze und die über den Knoten N-1 direkt an den Knoten N übermittelten Datensätze in den beiden FIFO-Speichern 2' des Speichers 29 gespeichert werden, nachdem sie durch Durchlaufen der FIFO-Pufferspeicher 2 zeitsynchronisiert wurden. Soferne diese beiden Datensätze gemäß einem Voting im Voter 1' als übereinstimmend erkannt werden, kann noch auf das Eintreffen der vom Knoten N-2 an den Knoten N+1 direkt übermittelten Daten nach ihrem Ringumlauf gewartet werden, die vom Knoten N-3 direkt dem Knoten N zugeführt werden. Um den Zeitpunkt des Auslesens des Speichers 29 bzw. der gevoteten Daten zu triggern, kann man vorsehen, daß das Eintreffen der vom Knoten N-3 abgegebenen, ursprünglich vom Knoten N-2 in den Ring eingespeisten Daten das Auslesen der Pufferspeicher 2' und den Beginn des Votings triggert, ohne daß diese Daten selbst Anteil an dem Voting zu nehmen.

Soferne vom Knoten N-2 Daten in den Ring aufgegeben werden, ist als weitere Möglichkeit vorgesehen, daß im Knoten N eine Speicherung des direkt eingehenden Datensatzes und des über den Knoten N-1 eingehenden Datensatzes im Speicher 29 erfolgt. Soferne es sich um idente Daten handelt, werden diese Daten nach dem Voting und Abwarten des richtigen Zeitpunktes dem FPGA 10 zugeführt bzw. dort zur Entnahme zur Verfügung gestellt.

Soferne es sich um ungleiche Datensätze handelt, müßte lediglich die Tatsache der Ungleichheit, z.B. mittels eines Ungleichflag, im Speicher 29 gespeichert werden. Sobald im Knoten N sodann nach einem Ringumlauf die vom Knoten N-2 an den Knoten N+1 direkt abgegebenen Daten beim Knoten N eintreffen, können diese Daten ohne Voting als richtig bewertet werden und dem FPGA 10 zur Verfügung gestellt werden, wenn man annimmt, daß diese umgelaufenen Daten mit einem der dem Speicher 29 zugeführten, als ungleich bewerteten Datensätzen gleich ist.

Sobald jedoch im Speicher 29 bereits ein Datensatz gespeichert worden ist, der aufgrund eines Vergleiches von zwei Datensätzen bzw. Votings als richtig bewertet wurde, so kann dieser Speicher genau dann geleert bzw. seine Daten an den FPGA 10 weitergeleitet werden, sobald der entsprechende Datensatz aus dem Knoten N-3 direkt beim Knoten N eintrifft.

Diese beschriebenen Vorgangsweisen stellen Votings dar, da ein Eintreffen von zwei identen Datensätzen als Mehrheitsvoting zu betrachten ist. Der Fall, daß bei ungleichen Datensätzen der dritte Datensatz als richtig bewertet wird, stellt eine Weitergabe des Votingvorganges von diesem Knoten an die nachfolgenden Knoten dar, in denen ein Voting mit einer dem Redundanzgrad des Ringsystemes entsprechenden Anzahl von gleichen Ursprung besitzenden Datensätzen erfolgt. Diese beschriebenen speziellen Arten der Durchführung des Votings sind nur für diejenigen Datensätze relevant, die bezogen auf einen Knoten N in den jeweils diesem Knoten N vorangehenden Knoten abgesendet werden, wobei die Anzahl dieser vorangehenden Knoten maximal dem Redundanzgrad des Ringes entspricht.

Diese speziellen Arten des Votings sind auf Datensätze beschränkt, die vom Knoten in den Ringmechanismus bzw. das Kommunikationsnetz neu eingeführt wurden, und auf eine Anzahl von im Ring vor diesem Knoten liegenden Knoten beschränkt, die dem Redundanzgrad des Ringes entspricht.

Die Einheit bei der Durchführung des Voting ist ein Datum, das z.B. ein Bit, ein Byte, ein Nibble od.dgl. sein kann. Die Größe der Einheit der dem Voting unterzogenen Daten kann somit gewählt werden.

## Patentansprüche

1. Verfahren zur Übertragung von Daten in einem Kommunikationsnetzwerk, insbesondere für Flugsicherungsanlagen mit einer Anzahl von in einem Ringsystem hintereinander angeordneten Knoten, wobei zur redundanten Datenübertragung an jeden Knoten eine Mehrzahl von separaten, eingehenden und abgehenden Übertragungsmedien angschlossen ist, in welchem Ringsystem die Daten, z.B. Sprach- und/oder Rechner- und/oder Video- und/oder Signalisierungsdaten, von Knoten zu Knoten in unidirektional umlaufenden Übertragungsrahmen transportiert werden und wobei in den einzelnen Knoten mit Peripherieeinheiten (3,5), z.B. lnterfaces, Gateways, Prozessormodulen, Telefonanlagen od.dgl., Daten in die umlaufenden Rahmen aufgeben und/oder aus diesen entnommen werden.
dadurch gekennzeichnet,
daß in dem Ringsystem die Daten jedem Knoten (N) über Punkt-zu-Punkt-Verbindungen von zumindest drei, vorzugsweise unmittelbar, im Ring vorangehenden Knoten (N-1, N-2, N-3) über jeweils ein eigenes Übertragungsmedium (M1,M2,M3) zugeführt werden, sodaß diesem Knoten (N) über jedes der einzelnen, von den angeschlossenen vorangehenden Knoten (N-1, N-2, N-3) abgehende Übertragungsmedien (M1, M2, M3) jeweils alle von dem jeweiligen vorangehenden Knoten abgegebenen Daten zugeführt werden,
und daß von jedem Knoten (N) seine eigenen abzusendenden Daten und alle von den vorangehenden Knoten (N-1, N-2, N-3) empfangenen Daten, gegebenenfalls nach Entnahme der vom Knoten (N) selbst in diesen Rahmen aufgegebenen Daten, an zumindest drei, vorzugsweise unmittelbar, im Ringsystem nachfolgende über Punkt-zu-Punkt-Verbindungen und über jeweils ein eigenes Übertragungsmedium (M1, M2, M3) angeschlossene Knoten (N+1, N+2, N+3) übertragen werden.

2. Verfahren nach Anspruch 1, dadurch gekennzeichnet,
daß in jedem Knoten (N) die auf den einzelnen Übertragungsmedien (M1, M2, M3) einlangenden Daten in einem Voter (1) einem Voting unterzogen werden, wobei ein Vergleich auf Übereinstimmung der auf den einzelnen Übertragungsmedien eingehenden Daten erfolgt und daß im Falle einer einstimmig erfolgenden Entscheidung oder einer Mehrheitsentscheidung oder bei Eintreffen von Daten auf nur einem Übertragungsmedium taktweise das resultierende Datum bzw. die daraus resultierenden Daten entnommen und/oder den nachfolgenden Knoten (N+1, N+2, N+3) übermittelt werden.

3. Verfahren nach Anspruch 1 oder 2, dadurch gekennzeichnet, daß in jedem Knoten (N), die auf einem Übertragungsmedium (M1, M2, M3) einlangenden Daten vor ihrer Weitergabe an den Voter (1) in einem elastischen Puffer (2), vorzugsweise einem FIFO-Pufferspeicher, zwischengespeichert werden.

4. Verfahren nach einem der Ansprüche 1 bis 3, dadurch gekennzeichnet, daß der Nennfüllgrad des FlFO-Pufferspeichers (2), vorzugsweise vom Voter (1), detektiert wird und daß die gespeicherten Daten aus den einzelnen, unterschiedlichen Nennfüllgrad besitzenden FlFO-Pufferspeichern (2) dem Voter (1) im Gleichtakt dann weitergegeben werden, wenn innerhalb eines, vorzugsweise einem Rahmentakt entsprechenden Zeiffensters vor Ablauf einer Zeitspanne, die der Summe der Taktzeiten aller Takte des Rahmens entspricht, alle oder eine Mehrheit, der vorgesehenen FlFO-Pufferspeicher (2) ihren Nennfüllgrad erreicht hat, oder daß mit der Weitergabe der Daten begonnen wird, wenn diese Zeitspanne um ein bestimmtes Ausmaß, vorzugsweise um einen Takt, überschritten ist.

5. Verfahren nach einem der Ansprüche 1 bis 4, dadurch gekennzeichnet, daß mit einer Weitergabe der Daten frühestens nach Ablauf des vorletzten Taktes des vorhergehenden Rahmens begonnen wird, d.h., daß das Zeiffenster maximal zwei Takte beträgt und die Zeitspanne nur um maximal einen Takt unterschritten bzw. überschritten werden darf und/oder daß die detektierten Nennfüllgrade der einzelnen FIFO-Pufferspeicher (2) einem Voting unterzogen werden und nur im Falle, daß alle oder die Mehrheit der dem Voting unterzogenen FIFO-Pufferspeicher (2) ihren Nennfüllgrad erreicht haben, die Übertragung der auf den einzelnen Übertragungsmedien (M1, M2, M3) eingelangten Daten durch das Ringsystem als zeitgerecht erfolgt gewertet wird und/oder daß als letzter Takt des Rahmens ein Leertakt übertragen wird und/oder daß die von einem Knoten (N) abgesendeten Rahmen gleichzeitig an die zu verschiedenen nachfolgenden Knoten (N+1, N+2, N+3) abgehenden Übertragungsmedien (M1, M2, M3) aufgegeben werden.

6. Verfahren nach einem der Ansprüche 1 bis 5, dadurch gekennzeichnet, daß die Zeitdifferenz zwischen gleichen aber über eine unterschiedliche Anzahl von Knoten eintreffenden Daten durch die Zwischenspeicherung der Daten in den elastischen Pufferspeichern (2) ausgeglichen wird, wobei der Unterschied zwischen den Sollwerten der Nennfüllgrade der einzelnen elastischen Pufferspeicher (2) jeweils der Zeitspanne bzw- einem Mehrfachen der Zeitspanne entspricht, mit der ein umlaufender Rahmen bei Durchlaufen eines Knotens verzögert wird.

7. Verfahren nach einem der Ansprüche 1 bis 6, dadurch gekennzeichnet, daß in einer Anzahl von im Ringsystem unmittelbar hintereinanderliegenden Knoten jeweils zumindest ein CPU- bzw. Datenprozessor (-modul) (16) angeordnet ist,
daß zum Vergleich der von den einzelnen Prozessoren (16) in den einzelnen aufeinanderfolgenden Knoten als Resultat ihrer Tätigkeit ermittelten Daten diese Daten in den jeweiligen aufeinanderfolgenden Knoten in jeweils ein und denselben Rahmenbereich ein und desselben umlaufenden Rahmens aufgegeben werden,
daß die Rahmenbereiche mit den Daten der redundanten Prozessoren in den jeweils folgenden Knoten in Hinblick auf Ihre Übereinstimmung gevotet werden,
und daß das Kommunikationssystem mit derselben Vorgangsweise wie beim Voting der vom Netzwerk empfangenen Daten ein Voting über die Daten der redundanten Prozessoren durchführt und die und nur die von allen bzw. von der Prozessormehrheit übereinstimmend abgegebenen Daten im Ringsystem weitergegeben und allen Knoten zur Verfügung gestellt werden.

8. Verfahren nach einem der Ansprüche 1 bis 7, dadurch gekennzeichnet, daß zur Erreichung einer Atomic-broadcast-Übertragung in jedem Knoten (N) die eigenen vom Knoten (N) in einen Übertragungsrahmen aufgegebenen Daten gespeichert und mit den mit diesem Übertragungsrahmen nach einem Umlauf im Ringsystem wieder eintreffenden Daten gegebenenfalls nach deren Voting verglichen werden,
daß im Falle einer Nichtübereinstimmung der Daten von diesem Knoten (N) eine Fehlermeldung an alle Knoten übermittelt wird und
daß als Folge die von diesem Knoten (N) abgegebenen und aufgrund des Vergleiches als unrichtig bewerteten Daten von allen Knoten verworfen bzw. als unrichtig bewertet werden.

9. Kommunikationsnetzwerk, insbesondere für Flugsicherungsanlagen, mit einer Anzahl von in einem Ringsystem hintereinander angeordneten Knoten (N), wobei zur redundanten Datenübertragung an jeden Knoten eine Mehrzahl von separaten, eingehenden und abgehenden Übertragungsmedien angschlossen ist, in welchem Ringsystem die Daten, d.h. Sprach- und/oder Rechner- und/oder Video- und/oder Signalisierungsdaten, von Knoten zu Knoten in unidirektional umlaufenden Rahmen transportiert sind, und wobei an die einzelnen Knoten (N) Peripherieeinheiten (3), z.B. Interfaces, Gateways, Telefonanlagen od.dgl., angeschlossen sind, mit denen Daten in die umlaufenden Rahmen aufgebbar und/oder aus diesen entnehmbar sind, insbesondere zur Durchführung des Verfahrens nach einem der Ansprüche 1 bis 8,
dadurch gekennzeichnet,
daß jeder Knoten (N) in Form einer Punkt-zu-Punkt-Verbindung an zumindest drei, vorzugsweise unmittelbar, im Ring vorangehende Knoten (N-1, N-2, N-3) über jeweils ein eigenes einlangendes Übertragungsmedium (M1, M2, M3) angeschlossen ist,
daß jedem Knoten (N) über die einzelnen Übertragungsmedien (M1, M2, M3) von jedem dieser vorangehenden Knoten (N-1, N-2, N-3) jeweils alle abgehenden Daten zugeführt sind,
daß jeder der Knoten (N) jeweils über ein eigenes abgehendes Übertragungsmedium (M1, M2, M3) in Form einer Punkt-zu-Punkt-Verbindung an zumindest drei, vorzugsweise unmittelbar, im Ringsystem nachfolgende Knoten (N+1, N+2, N+3) angeschlossen ist,
und daß von jedem Knoten (N) über jedes abgehende Übertragungsmedium (M1, M2, M3) seine eigenen abzusendenden Daten und alle von den angeschlossenen vorangehenden Knoten (N-1, N-2, N-3) empfangenen Daten, gegebenenfalls nach Entnahme der vom Knoten (N) selbst in einen unmittelbar vorangehenden Rahmen aufgegebenen Daten, jedem von diesen angeschlossenen folgenden Knoten (N+1, N+2, N+3) zugeführt sind.

10. Netzwerk nach Anspruch 9, dadurch gekennzeichnet, daß in jedem Knoten (N) ein Voter (1) vorgesehen ist, an den die einzelnen von den jeweiligen vorangehenden Knoten (N-1, N-2, N-3) einlangenden Übertragungsmedien (M1, M2, M3) angeschlossen sind, welcher Voter (1) zur Feststellung der Übereinstimmung der auf den einzelnen Übertragungsmedien (M1, M2, M3) eingehenden Daten vorgesehen ist und daß im Falle einer einstimmigen Entscheidung oder einer Mehrheitsentscheidung oder bei Eintreffen von Daten nur auf einem Übertragungsmedium taktweise jeweils das resultierende bzw. als richtig bewertete Datum entnommen und/oder den nachfolgenden Knoten (N+1, N+2, N+3) zugeführt wird, oder daß bei nicht eindeutiger Entscheidung, nach einer fixen Regel eines der anliegenden Daten, vorzugsweise das, das über weniger Knoten gelaufen ist, entnommen und/oder weitergeleitet wird.

11. Netzwerk nach Anspruch 9 oder 10, dadurch gekennzeichnet, daß an den Voter (1) eine Dateneingabe- und/oder -ausgabeeinheit (6, 10, 11) angeschlossen ist, an die die vom Knoten (N) abgehenden Übertragungsmedien (M1, M2, M3) angeschlossen sind.

12. Netzwerk nach einem der Ansprüche 9 bis 11, dadurch gekennzeichnet, daß der umlaufende Rahmen (30) eine festgelegte Nenntaktanzahl aufweist und/oder daß jeder Knoten (N) mit jeweils einer ungeraden Anzahl von vorangehenden und nachfolgenden Knoten verbunden ist und/oder daß jedes der in einem Knoten (N) einlangenden Übertragungsmedien (M1, M2, M3) an jeweils einen elastischen Pufferspeicher (2), insbesondere FlFO-Pufferspeicher, angeschlossen ist, welche Pufferspeicher (2) dem Voter (1) vorgeschaltet sind, wobei gegebenenfalls die einzelnen Pufferspeicher (2) unterschiedliche Nennfüllgrade aufweisen und die Nennfüllgrade, mit zumindest einem Detektor bzw. vom Voter (1) überwacht bzw. abgefühlt sind, wobei gegebenenfalls der Detektor an die Knotensteuerung (7, 13, 14) und/oder den Voter (1) angeschlossen ist.

13. Netzwerk nach einem der Ansprüche 9 bis 12, dadurch gekennzeichnet, daß die Knotensteuerung (7, 13, 14) in Abhängigkeit von den Detektionsergebnissen und in Abhängigkeit vom Zeitpunkt des Eintreffens des umlaufenden Rahmens (30) die Übertragung der Daten vom Voter (1) in die Dateneingabe- und/oder -ausgabeeinheit (6, 10, 11) bzw. die Weiterleitung der Daten an die nächsten Knoten (N+1, N+2, N+3) einleitet.

14. Netzwerk nach einem der Ansprüche 9 bis 13, dadurch gekennzeichnet, daß die Knotensteuerung (7, 13, 14) eine Einrichtung (7) zur Überwachung der Taktzeiten und- anzahl und/oder eine Einrichtung zur Feststellung und/oder Weitergabe des Votingergebnisses und/oder eine Einrichtung (10, 11, 14) zur Eingabe und zur Entnahme der Daten in bzw. aus den dem Knoten zugeordneten Rahmenslots des umlaufenden Rahmens und/oder eine Einrichtung (13) zur Feststellung des Eintreffens eines Rahmens und/oder eine Einrichtung zur Generierung eines neuen Rahmens und/oder Einrichtungen zur Fehlerfeststellung und/oder Generierung von Fehlermeldungen aufweist.

15. Netzwerk nach einem der Ansprüche 9 bis 14, dadurch gekennzeichnet, daß der letzte Takt eines umlaufenden Rahmens (30) ein Leertakt ist.

16. Netzwerk nach einem der Ansprüche 9 bis 15, dadurch gekennzeichnet, daß in einer Anzahl von im Ringsystem unmittelbar hintereinanderliegenden Knoten jeweils zumindest ein Datenprozessor (-modul) (16) angeordnet ist,
daß zum Vergleich der von den in den einzelnen Knoten angeordneten redundant arbeitenden Prozessoren (16) ermittelten bzw. abgegebenen Daten diese Daten von dem jeweiligen Knoten und von den jeweiligen folgenden Knoten in jeweils ein- und denselben Rahmenbereich ein- und desselben umlaufenden Rahmens aufgegeben werden,
und daß die Votingergebnisse nachfolgender Knoten betreffend die Daten dieser Rahmenbereiche als Mehrheitsentscheidung für die Übereinstimmung bzw. Richtigkeit der von den redundant vorgesehenen Prozessoren (16) abgegebenen Daten herangezogen werden.

17. Netzwerk nach einem der Ansprüche 9 bis 16, dadurch gekennzeichnet, daß in jedem Knoten (N) ein Speicher (15) für die vom Knoten (N) in einem Übertragungsrahmen aufgegebenen Daten vorgesehen ist,
daß jeder Knoten einen Vergleicher (17) zum Vergleich der gespeicherten Daten mit den in diesem Übertragungsrahmen nach einem Umlauf wieder bei diesem Knoten (N) eintreffenden Daten aufweist, und
daß dieser Knoten (N) bzw. der Vergleicher (17) bei Feststellung eines Unterschiedes bzw. Fehlers zwischen den gespeicherten und den einlangenden Daten eine Fehlermeldung betreffend diese Daten an alle anderen Knoten absendet, in denen als Folge diese Datenpakete verworfen werden und/oder daß in jedem Knoten N ein Speicher (29) vorgesehen ist, zur Zwischenspeicherung von aus dem oder aus einer beschränkten Anzahl von unmittelbar vorangehenden Knoten (N-1, N-2) eintreffenden Daten, welche Anzahl um eins kleiner als der Redundanzgrad ist, wobei gegebenenfalls der Speicher (29) einen Voter (1') aufweist zum sofortigen und/oder nach deren Umlauf durch das Ringsystem erfolgenden Voten von originär aus dieser Anzahl dieser Knoten stammenden Daten.
